**Europäisches Patentamt**

**European Patent Office**

**Office européen des brevets**

(19)

(11) Veröffentlichungsnummer . **0 037 845**
**B1**

(12)

# EUROPÄISCHE PATENTSCHRIFT

(45) Veröffentlichungstag der Patentschrift:
**21.08.85**

(51) Int. Cl.⁴: **F 01 K 23/10, F 01 K 3/24**

(21) Anmeldenummer: **80102507.3**

(22) Anmeldetag: **08.05.80**

---

(54) **Kombinierte Gasturbinen-Dampfkraftanlage.**

---

(30) Priorität: **11.04.80 CH 2793/80**

(43) Veröffentlichungstag der Anmeldung:
**21.10.81 Patentblatt 81/42**

(45) Bekanntmachung des Hinweises auf die Patenterteilung:
**21.08.85 Patentblatt 85/34**

(84) Benannte Vertragsstaaten:
**BE DE NL SE**

(56) Entgegenhaltungen:
**DE - A - 2 131 347**
**DE - A - 2 350 581**
**DE - A - 2 728 277**
**DE - B - 1 239 890**
**GB - A - 1 017 404**

(73) Patentinhaber: **GEBRÜDER SULZER AKTIENGESELLSCHAFT, Zürcherstrasse 9, CH-8401 Winterthur (CH)**

(72) Erfinder: **Aguet, Emile, Zinzikerbergstrasse 9, CH-8404 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

---

## Beschreibung

Die Erfindung betrifft eine kombinierte Gasturbinen-Dampfkraftanlage mit den Merkmalen des Oberbegriffs des Anspruchs 1.

Solche Anlagen haben den Vorteil einer sehr hohen Betriebssicherheit, indem bei einem Ausfall der Gasturbinengruppe oder des unabhängig beheizten Dampferzeugers der jeweils nicht betroffene Dampferzeuger und die Dampfturbine weiterhin und ohne jeglichen Unterbruch, eventuell mit verringerter Last, in Betrieb bleiben können. Ferner weisen sie eine hohe Betriebsflexibilität auf, indem der unabhängig beheizte Dampferzeuger, soweit er dafür eingerichtet ist, mit beliebigen Brennstoffen, auch Kohle, betrieben werden kann und nicht nur mit den Brennstoffen, die für die Gasturbine zulässig sind.

Dagegen erreichen die bekannten Anlagen dieser Art wegen der höheren Rauchgasverluste nicht den gleich hohen Wirkungsgrad wie jene, bei denen die Gasturbinenabgase einem befeuerten Dampferzeuger zugeführt werden.

Es ist Aufgabe der Erfindung, eine kombinierte Anlage zu schaffen, die möglichst geringe Rauch- und Abgasverluste aufweist, gleichzeitig aber eine sehr hohe Betriebsflexibilität aufweist.

Diese Aufgabe wird erfindungsgemäß durch die Merkmale des kennzeichnenden Teils des Anspruchs 1 gelöst.

Mit dieser Schaltung der Speisewasservorwärmer können bei normalem Betrieb die Abgase der Gasturbine sehr tief, das heißt bis in die Gegend ihres Taupunktes abgekühlt werden. Wird als Brennstoff für die Gasturbine schwefelarmes Öl oder Gas verwendet, so kann der Taupunkt bei rund 100°C liegen; die Abgasverluste der Gasturbine werden daher gering, selbst dann, wenn die Abgase noch einen hohen Sauerstoffanteil aufweisen. Die Schaltung hat den Vorteil, daß einerseits — mit allerdings etwas verminderter Last — die Gasturbinengruppe mit dem Abgasdampferzeuger und die Dampfturbine auch in Betrieb stehen können, wenn der unabhängig beheizte Dampferzeuger außer Betrieb ist und daß andererseits auch der unabhängig beheizte Dampferzeuger mit der Dampfturbine betrieben werden kann, wenn die Gasturbinengruppe mit dem Abgasdampferzeuger ausgefallen ist. Weitere Vorteile der Erfindung sind darin zu sehen, daß die Speisewasservorwärmung für beide Dampferzeuger in einem einzigen Speisewasservorwärmsystem erfolgt, das entsprechend kostengünstig gebaut werden kann.

Aus der DE-B-1 239 890 ist eine kombinierte Gas-Dampf-Kraftanlage bekannt, bei der ein unabhängig von der Gasturbinengruppe beheizter Dampferzeuger eine in Hochdruckstufe, Mitteldruckstufe und Niederdruckstufe unterteilte Dampfturbine mit Dampf beliefert, um eine Grundlast zu decken. Zwischen dem Dampfturbinenkondensator und dem Eintritt in den Dampferzeuger ist eine Reihe von Speisewasservorwärmern vorgesehen, die mit Anzapfdampf unterschiedlichen Druckes aus der Dampfturbine beheizt werden. Zur Spitzenlastdeckung ist ein abgasbeheizter Dampferzeugerteil vorgesehen, wobei der in diesem erzeugte und gegebenenfalls überhitzte Dampf über eine Entnahmeleitung der Mitteldruckstufe der Dampfkraftanlage zugeführt wird. Dem abgasbeheizten Dampferzeugerteil ist abgasseitig ein Speisewasservorwärmer nach- oder parallelgeschaltet, der wasserseitig den Vorwärmern parallelschaltbar ist, die von Anzapfdampf aus der Mitteldruckstufe und der Hochdruckstufe beheizt werden. Außerdem ist ein abgasbeheizter Speisewasservorwärmer vorgesehen, der wasserseitig stromoberhalb einer Gabelung angeordnet ist und einem oder mehreren Speisewasservorwärmern der Dampfkraftanlage parallschaltbar ist, der von Anzapfdampf des niedrigsten Druckes der Mitteldruckstufe beheizt ist bzw. die von Anzapfdampf des niedrigsten Druckes der Mitteldruckstufe und von Anzapfdampf der Niederdruckstufe der Dampfturbine beheizt sind. Mit dieser bekannten Anlage ist es nicht möglich, bei einem Ausfall des unabhängig beheizten Dampferzeugers die Dampfturbine allein mit Dampf aus dem abgasbeheizten Dampferzeugerteil zu betreiben; dieser Anlage fehlt also die hohe Betriebsflexibilität, die die erfindungsgemäße Anlage aufweist.

Die Merkmale nach Anspruch 2 erlauben, zur Erwärmung des Speisewassers verhältnismäßig viel Anzapfdampf aus der tiefsten Entnahmestufe der Dampfturbine zu verwenden und somit die Verluste im Kondensator zu verkleinern, ohne daß der Dampfturbine viel Leistung entzogen wird.

Die Merkmale nach Anspruch 3 gestatten, im Normalbetrieb die Abgase der Gasturbine zusätzlich abzukühlen, jedoch im Falle eines Stillstandes der Gasturbine den Speisewasserbehälter voll mit Anzapfdampf zu beheizen.

Bei der Ausführungsform nach Anspruch 4 sind die beiden Speiseventile an den Stellen höchsten Drucks und tiefster Temperatur des Speisewassers angeordnet. Es besteht dort die geringste Kavitationsgefahr.

Zwei Ausführungsbeispiele der Erfindung werden nun anhand der Zeichnung näher erläutert. Es zeigt

Fig. 1 in schematischer Darstellung eine kombinierte Anlage nach der Erfindung und

Fig. 2 in gleicher Darstellung einen Ausschnitt einer abgewandelten Anlage.

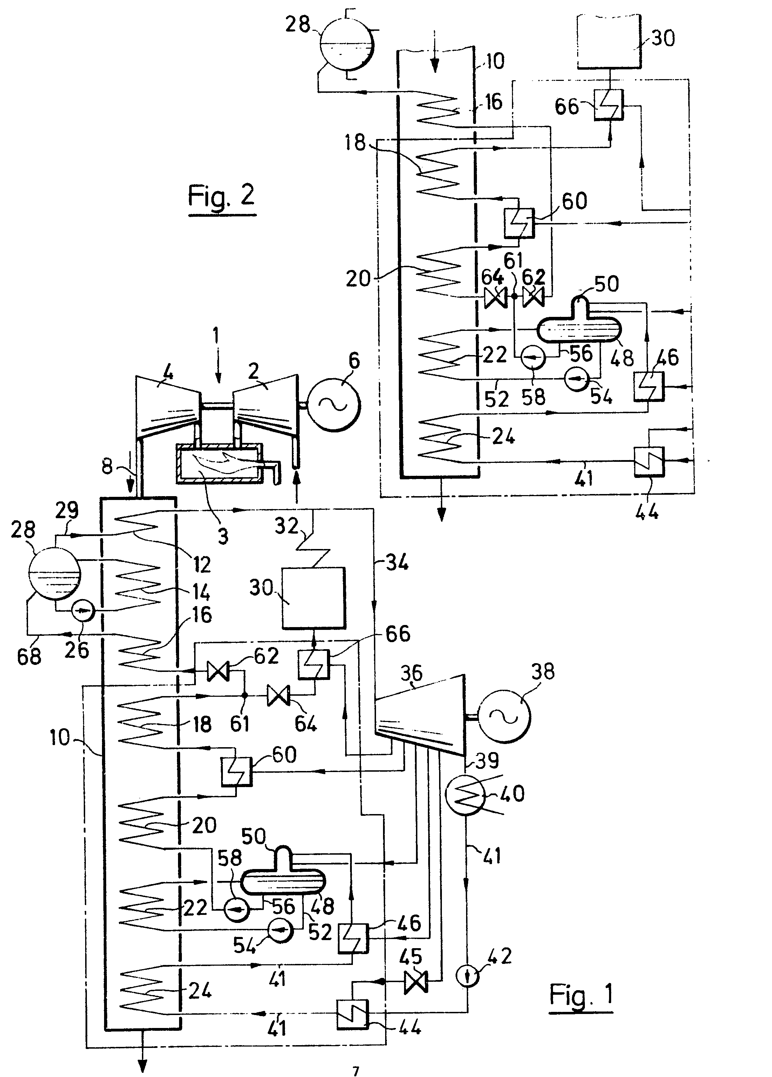

Bei der Anlage nach Fig. 1 ist eine Gasturbinengruppe 1 mit einem Verdichter 2, einer Brennkammer 3 und einer Gasturbine 4 vorgesehen. Auf einer für den Verdichter 2 und die Gasturbine 4 gemeinsamen Welle sitzt ein elektrischer Generator 6. An einem Abgasstutzen 8 der Gasturbine 4 ist ein Abgasdampferzeuger 10 angeschlossen, der — in Richtung des Gasstromes gesehen — in Reihe einen Überhitzer 12, einen Verdampfer 14, einen Speisewasserendvorwärmer 16, einen zweiten Hochdruckvorwärmer 18, einen ersten Hochdruckvorwärmer 20, einen Entgaservorwärmer 22 und schließlich einen Niederdruckvorwärmer 24 enthält. Der Verdampfer 14 wird mittels einer Umwälzpumpe 26 aus einer Dampf/Wasser-Trommel 28 mit Wasser versorgt. Das im Verdampfer 14 erzeugte Dampfgemisch strömt in die Trommel 28 zurück, wo der Dampf sich abscheidet und über eine Verbindungsleitung 29 dem Überhitzer 12 zuströmt.

Außer dem Abgasdampferzeuger 10 ist ein unabhängig von ihm befeuerter Dampferzeuger 30 vorgesehen. Dieser Dampferzeuger enthält nicht gezeichnete Endvorwärmerheizflächen für Speisewasser, einen Luftvorwärmer, einen Verdampfer und schließlich den schematisch dargestellten Überhitzer 32. Der Überhitzer 32 und der Überhitzer 12 des Abgasdampferzeugers 10 sind über nicht gezeichnete Ventile mit einer Frischdampfleitung 34 verbunden, die zu einer Dampfturbine 36 führt, die ebenfalls einen elektrischen Generator 38 antreibt.

Die Dampfturbine 36 sitzt mit ihrem Abdampfstutzen 39 auf einem Kondensator 40, an dem eine Kondensatleitung 41 angeschlossen ist, die über eine Kondensatpumpe 42 und einen ersten Niederdruck-Anzapfdampfvorwärmer 44 zum Niederdruckvorwärmer 24 im Abgasdampferzeuger 10 führt. Die Kondensatleitung 41 führt dann weiter über einen zweiten Niederdruck-Anzapfdampfvorwärmer 46 zu einem auf einem Speisewasserbehälter 48 angeordneten Entgasungsturm 50. Am Boden des Speisewasserbehälters 48 ist eine Leitung 52 angeschlossen, die über eine Niederdruckumwälzpumpe 54 und den Entgaservorwärmer 22 im Abgasdampferzeuger 10 zum Speisewasserbehälter 48 zurückführt. Am Boden dieses Speisewasserbehälters ist eine weitere Leitung 56 angeschlossen, die über eine Speisepumpe 58 zum ersten Hochdruckvorwärmer 20 im Abgasdampferzeuger 10 führt. Der Austritt des Hochdruckvorwärmers 20 ist über einen ersten Hochdruck-Anzapfdampfvorwärmer 60 mit dem Eintritt des zweiten Hochdruckvorwärmers 18 verbunden, dessen Austritt zu einer Gabelung 61 führt. Die Gabelung 61 ist einerseits über ein Speiseventil 62 und den Endvorwärmer 16 mit der Dampf/Wasser-Trommel 28 des Abgasdampferzeugers 10 und andererseits über ein Speiseventil 64 und einen zweiten Hochdruck-Anzapfdampfvorwärmer 66 mit dem Speisewassereintritt des unabhängig befeuerten Dampferzeugers 30 verbunden.

Die Dampfturbine 36 weist fünf Dampfentnahmestutzen auf, die den ersten Niederdruck-Anzapfdampfvorwärmer 44, den zweiten Niederdruck-Anzapfdampfvorwärmer 46, den Entgasungsturm 50, den ersten Hochdruck-Anzapfdampfvorwärmer 60 bzw. den zweiten Hochdruck-Anzapfdampfvorwärmer 66 in weiter unten beschriebenen Fällen mit Dampf versorgen.

Im Normalbetrieb der beschriebenen Anlage sind die Gasturbinengruppe 1, die beiden Dampferzeuger 10 und 30 und die Dampfturbine 36 in Betrieb. Im Verdichter 2 wird Umgebungsluft angesaugt und komprimiert, die dann in die Brennkammer 3 gelangt. In der Brennkammer 3 wird unter Verwendung der komprimierten Luft beispielsweise ein gasförmiger Brennstoff verbrannt, was eine entsprechende Volumenvergrößerung des Gases zur Folge hat. Das Gas wird dann in der Gasturbine 4 entspannt und über den Abgasstutzen 8 dem Abgasdampferzeuger 10 zugeführt.

Der in den Dampferzeugern 10 und 30 erzeugte Dampf wird über die Frischdampfleitung 34 der Dampfturbine 36 zugeführt, dort entspannt und im Kondensator 40 niedergeschlagen. Das Kondensat wird dem ersten Niederdruck-Anzapfdampfvorwärmer 44 und danach im abgasbeheizten Niederdruckvorwärmer 24 auf eine Temperatur vorgewärmt, die so hoch ist, daß der im zweiten Niederdruck-Anzapfdampfvorwärmer 46 anstehende Entnahmedampf nicht mehr kondensiert. Eine weitere Vorwärmung und Entgasung des Speisewassers ergeben sich im Speisewasserbehälter 48 bzw. im damit verbundenen Entgasungsturm 50. Auch hier ist die Anlage derart ausgelegt, daß im Normalbetrieb durch die Wärmezufuhr vom Entgaservorwärmer 22 das Wasser und das Dampfpolster im Speisewasserbehälter 48 so warm werden, daß der Dampfturbine 36 über die zum Entgaserturm 50 führende Entnahmeleitung kein Dampf entzogen wird. Analog ausgelegt sind auch die Anzapfdampfvorwärmer 60 und 66.

Die Speiseventile 62 und 64 werden auf übliche Weise in Abhängigkeit der Last des Abgasdampferzeugers 10 bzw. des unabhängig befeuerten Dampferzeugers 30 betätigt.

Geht der unabhängig befeuerte Dampferzeuger 30 gewollt oder ungewollt außer Betrieb, so wird das Speisewasservorwärmsystem von einer geringeren Wassermenge durchströmt. Den Abgasen der Gasturbinengruppe 1 wird im Abgasdampferzeuger 10 durch die Heizflächen 12 bis 22 weniger Wärme entzogen. Das Temperaturgefälle am Niederdruckvorwärmer 24 wird daher höher, so daß der erste Niederdruck-Anzapfdampfvorwärmer 44 durch Schließen eines in der zugehörigen Entnahmeleitung angeordneten Ventils 45 ausgeschaltet werden kann.

Gehen dagegen die Gasturbinengruppe 1 und der Abgasdampferzeuger 10 außer Betrieb, so sinkt an den Eingängen der Anzapfdampfvorwärmer 46, 60 und 66 sowie im Speisewasserbehälter 48 die Wassertemperatur. Dies hat zur Folge, daß nun diesen Apparaten Dampf aus der Dampfturbine 36 zugeführt wird, der dort kondensiert. Mit dieser Dampfentnahme aus der Dampfturbine ist eine Reduktion des Wirkungsgrades verbunden. Da dies jedoch nur ausnahmsweise auftritt, ist die Wirkungsgradeinbuße nicht erheblich.

Die Anlage nach Fig. 2 unterscheidet sich von der nach Fig. 1 dadurch, daß die Gabelung 61 und die Speiseventile 62 und 64 im Speisewasserstrom stromaufwärts vor den abgasbeheizten Hochdruckvorwärmer 20 bzw. den ersten Hochdruck-Anzapfdampfvorwärmer 60 gerückt sind.

Dies führt dazu, daß zwischen dem Speisewasserbehälter 48 und der Dampf/Wasser-Trommel 28 des Abgasdampferzeugers 10 nur noch der Endvorwärmer 16 vorhanden ist. Durch das Vorverlegen der Gabelung 61 werden die Speiseventile 62 und 64 in eine Zone gebracht, in der keine Kavitationsgefahr besteht.

Aus thermodynamischen Gründen würe es an sich zweckmäßig, zwischen dem Speiseventil 62 und dem Endvorwärmer 16 einen abgasbeheizten Zwischenvorwärmer einzuschalten, der im Abgasstrom vorzugsweise zwischen den Hochdruckvorwärmern 18 und 20 angeordnet sein könnte. Einer solchen Lösung gegenüber ist jedoch die Schaltung nach Fig. 2 einfacher und preisgünstiger.

Statt direkt in den Speisewasserbehälter 48 kann die Rücklaufleitung 52 vom Entgaservorwärmer 22 aus in den Entgasungsturm 50 führen. Der Entgasungsturm 50 weist den üblichen Schwadenabzugstutzen auf, über den abgeschiedene Luft abgeführt werden kann.

Anstelle der ungesteuerten Entnahmen an der Dampfturbine 36 können auch Ventile vorgesehen sein, was eine freiere Wahl der Anzapfstellen gestattet.

## Patentansprüche

1. Kombinierte Gasturbinen-Dampfkraftanlage mit mindestens einer Gasturbinengruppe (1) mit einem gasseitig daran angeschlossenen Abgasdampferzeuger (10), der Speisewasservorwärmer (16), Verdampfer (14) und Überhitzer (12) aufweist, und mit mindestens einem unabhängig von der Gasturbinengruppe (1) mit Verbrennungsluft und Brennstoff beheizten Dampferzeuger (30), der Speisewasservorwärmer, Verdampfer und Überhitzer (32) aufweist, wobei das wasser- und dampfführende Drucksystem des Abgasdampferzeugers (10) mit dem wasser- und dampfführenden Drucksystem des unabhängig beheizten Dampferzeugers (30) eintrittsseitig (Gabelung 61) und austrittsseitig miteinander verbunden sind und die austrittsseitige Verbindung zum Eintritt einer gemeinsamen Dampfturbine (36) führt, so daß die Dampfturbine (36) mit Dampf aus beiden Dampferzeugern (10, 30) gleichzeitig oder mit Dampf aus dem Abgasdampferzeuger (10) allein oder mit Dampf aus dem unabhängig beheizten Dampferzeuger (30) allein betreibbar ist, dadurch gekennzeichnet, daß zwischen der Gabelung (61) und dem Austritt der Dampfturbine (36) ein für beide Dampferzeuger (10, 30) gemeinsames Speisewasservorwärmsystem vorgesehen ist, das aus mehreren wasserseitig in Serie geschalteten Vorwärmern (18, 60, 20, 46, 24, 44) besteht, die so gebaut und angeordnet sind, daß von je zwei wasserseitig unmittelbar aufeinander folgenden Vorwärmern einer durch Abgas der Gasturbine (4) und der andere durch Anzapfdampf der Dampfturbine (36) beheizbar ist, daß die Endvorwärmung des Speisewassers stromunterhalb der Gabelung (61) einerseits im Abgasdampferzeuger (10) und andererseits im unabhängig beheizten Dampferzeuger (30) erfolgt und daß die austrittsseitige Verbindung der Drucksysteme hinter den Endüberhitzern (12, 32) der beiden Dampferzeuger (10, 30) liegt.

2. Kombinierte Gasturbinen-Dampfkraftanlage nach Anspruch 1, dadurch gekennzeichnet, daß der im Strom des Speisewassers auf den Dampfturbinen-Kondensator folgende erste Vorwärmer ein mit Entnahmedampf beheizter Vorwärmer ist.

3. Kombinierte Gasturbinen-Dampfkraftanlage nach Anspruch 1 oder 2, dadurch gekennzeichnet, daß das Speisewasservorwärmsystem einen Speisewasserbehälter enthält, der sowohl an einen Heizkreislauf, der einen abgasbeheizten Vorwärmer einschließt, als auch an eine Entnahmestelle der Dampfturbine angeschlossen ist.

4. Kombinierte Gasturbinen-Dampfkraftanlage nach einem der Ansprüche 1 bis 3, dadurch gekennzeichnet, daß die Gabelung des Speisewassersystems im Strom des Speisewassers zwischen dem Speisewasserbehälter und den anschließenden Vorwärmern vorgesehen ist.

## Claims

1. A combined gas turbine and steam power plant comprising at least one gas turbine set (1) having an exhaust gas steam producer (10) connected to it on the gas side and comprising a feed water preheater (16), an evaporator (14) and a superheater (12), the plant also comprising at least one steam producer (30) heated independently of the gas turbine set by combustion-supporting air and fuel and having a feed water heater, an evaporator and a superheater (32), the water-carrying and steam-carrying pressure systems of both steam producers (10, 30) being interconnected on the inlet side (bifurcation 61) and on the outlet side, the connection on the outlet side extending to a common steam turbine (36), so that the steam turbine (36) can be operated with steam from the two steam producers (10, 30) simultaneously or with steam just from the exhaust gas steam producer (10) alone or with steam just from the independent steam producer (30) alone, characterised in that a feed water preheating system common to the two steam producers (10, 30) os provided between the bifurcation (61) and the outlet of the steam turbine (36) and comprises a number of preheaters (18, 60, 20, 46, 24, 44) which are connected in series on the water side and which are so constructed and arranged that, of any two preheaters in immediate consecutive relationsship on the water side, one is heatable by exhaust gas from the gas turbine (4) and the other by bled steam of the turbine (36), final preheating of the feed water occurs downstream of the bifurcation (61) in the exhaust gas steam producer (10) and in the independently heated steam producer (30) and the outletside connection between the pressure sys-

tems is disposed after the final superheaters (12, 32) of the two steam producers (10, 30).

2. A plant according to claim 1, characterised in that the first preheater which comes after the steam turbine condenser as considered in the feed water flow is a preheater heated by bled steam.

3. A plant according to claim 1 or 2, characterised in that the feed water preheating system comprises a feed water tank connected to a heating circuit comprising an exhaust-gas-heated preheater and to a bleeding station of the steam turbine.

4. A plant according to any one of claims 1 to 3, characterised in that the bifurcation of the feed water system in the feed water flow is disposed between the feed water tank and the subequent preheaters.

**Revendications**

1. Installation de force motrice à vapeur et de turbine à gaz combinée qui comporte au moins un groupe turbine à gaz (1) auquel est raccordé, côté, gaz, en générateur de vapeur de gaz brûlés (10) comprenant un préchauffeur d'eau d'alimentation (16), un évaporateur (14) et un surchauffeur (12), et qui comporte au moins un générateur de vapeur (30) chauffé au moyen d'air de combustion et de combustible indépendamment du groupe turbine à gaz (1), lequel générateur de vapeur (30) comprend un préchauffeur d'eau d'alimentation, un évaporateur et un surchauffeur (32), le système sous pression conduisant l'eau et la vapeur du générateur de vapeur de gaz brûlés (10) et le système sous pression conduisant l'eau et la vapeur du générateur de vapeur (30) chauffé indépendamment étant reliés l'un à l'autre côté entrée (branchement 61) et côté sortie et la communication côté sortie menant à l'entrée d'une turbine à vapeur commune (36), de telle sorte que la turbine à vapeur (36) puisse fonctionner au moyen de vapeur des deux générateurs de vapeur (10, 30) en même temps ou au moyen de vapeur du générateur de vapeur de gaz brûlés (10) seulement ou au moyen de vapeur du générateur de vapeur (30) chauffé indépendamment seulement, caractérisée en ce qu'entre le branchement (61) et la sortie de la turbine à vapeur (36), il est prévu un système de préchauffage d'eau d'alimentation commun aux deux générateurs de vapeur (10, 30), système de préchauffage se composant de plusieurs préchauffeurs (18, 60, 20, 46, 24, 44) montés en série côté eau, qui sont construits en angencés de telle façon que de deux préchauffeurs qui se succèdent directement côté eau, l'un puisse toujours être chauffé par du gaz brûlé de la turbine à gaz (4) et l'autre, par de la vapeur de prélèvement de la turbine à vapeur (36) en ce que le préchauffage final de l'eau d'alimentation a lieu en aval du branchement (61) dans le sens du courant, d'une part, dans le générateur de vapeur de gaz brûlés (10) et, d'autre part, dans le générateur de vapeur (30) chauffé indépendamment et en ce que la communication côté sortie des systèmes sous pression se trouve en aval des surchauffeurs terminaux (12, 32) des deux générateurs de vapeur (10, 30).

2. Installation de force motrice à vapeur et de turbine à gaz combinée suivant la revendication 1, caractérisé en ce que le premier préchauffeur, qui, dans le sens du courant de l'eau d'alimentation, fait suite au condenseur de la turbine à vapeur, est un préchauffeur chauffé au moyen de vapeur de prélèvement.

3. Installation de force motrice à vapeur et de turbine à gaz combinée suivant l'une ou l'autre des revendications 1 et 2, caractérisé en ce que le système de préchauffage de l'eau d'alimentation comporte un réservoir à eau d'alimentation qui est raccordé tant à un circuit de chauffage comprenant un préchauffeur chauffé par du gaz brûlé qu'à un point de prélèvement de la turbine à vapeur.

4. Installation de force motrice à vapeur et de turbine à gaz combinée suivant l'une quelconque des revendications 1 à 3, caractérisé en ce que le branchement du système d'eau d'alimentation est prévu sur le courant de l'eau d'alimentation entre le réservoir à eau d'alimentation et les préchauffeurs raccordés.

**0 037 845**

Fig. 2

Fig. 1